# EUROPEAN PATENT SPECIFICATION

(11) **EP 2 190 155 B1**
(45) Date of publication and mention of the grant of the patent: **09.02.2011**
(21) Application number: 09176069.4
(22) Date of filing: 16.11.2009
(51) Int. Cl.: H04L 12/58

(54) **Method, device and system for transmitting messages**
Verfahren, Vorrichtung und System zum Übertragen von Benachrichtigungen
Procédé, dispositif et système pour la transmission de messages

(30) Priority: 19.11.2008 CN 200810217490
(43) Date of publication of application: 26.05.2010
(73) Proprietor: Huawei Technologies Co., Ltd., Longgang District, Shenzhen Guangdong 518129 (CN)
(72) Inventor: Jiang, Lingli, 518129, Shenzhen Guangdong 51829 (CN)
(74) Representative: Körber, Martin Hans

(56) References cited:
- EP-A- 1 793 543
- WO-A-2006/060340
- WO-A-2008/119883
- US-A1- 2003 120 805

## Description

### FIELD OF THE INVENTION

The disclosure relates to communication field, particularly to a method, device and system for transmitting messages.

### BACKGROUND

At present, a network service entity (such as, website, QQ, and so on) generally accesses a mobile communication network as a Service Provider (SP). To transmit a message to a mobile telephone user through the network service entity, a calling party has to carry an SP access preamble in the message.

In this case, the mobile communication network assigns an SP access code to the network service entity. When a user transmits a message to a called mobile terminal via a network service entity client, calling number of the message displayed on the called mobile terminal is the SP access code and a session identification. After receiving the short message, the called mobile terminal may reply the message. However, during the implementation of the disclosure, the inventor finds that since the called mobile terminal can not identify the real identity of the calling user according to the calling number and the addition of the preamble makes the called mobile terminal precautionary, the called mobile terminal is unwilling to reply this kind of message. Moreover, when the calling user actively transmits a message to the network service entity via a mobile terminal, the calling user can not input the called mobile terminal identification (such as a mobile telephone number) to be used for transmitting, which makes the calling user feel inconvenient to transmit messages to a client of the network service entity via the mobile terminal and obstructs the deployment and popularization of this type of service.
US2003/120805 A1 discloses a method for forwarding a communication message intended for one device to a next user device in a forwarding list, when the target device of the target user is un-available and the next user device in the forwarding list is available. The forwarding list comprising the next user device of one or more users is configured by the target user using a client application.
EP-A-1 793543 provides a method and system to solve a problem of how to send a message from a sending entity to a recipient entity over one of a plurality of communication channels through selecting a channel of sending the message. In the method of sending message content to a recipient entity, the message server obtains communication channels associated with the recipient including information about the status of those channels, so that the client device or the message server select a channel of the recipient to send the message via the selected channel.

### SUMMARY

The problem to be solved by embodiments of the disclosure is to allow a calling user to transmit a message on a mobile terminal to a network service entity of a called user with a mobile terminal identification of the called user.

In order to solve the above-mentioned technical problem, an embodiment of the disclosure provides a method for transmitting messages, including: receiving, by a message center, MC, a message, wherein the receipt identification of the message is a mobile terminal identification of a called user; acquiring, by the MC, network service entity server information corresponding to the mobile terminal identification of the called user through a correspondence relation between the mobile terminal identification of the called user and the network service entity server wherein the correspondence relation between the mobile terminal identification of the called user and the network service entity server is recorded by the status recording device after the network service entity server transmits the mobile terminal identification of the called user associated with an identification of a network service entity client of the called user to the status recording device when the called user logs on the network service entity server; and transmitting, by the MC, the message to the network service entity server according to the network service entity information.

An embodiment of the disclosure provides a status recording device, including: a recording unit, configured to receive a mobile terminal identification of a called user associated with an identification of a network service entity client of a the called user transmitted by a network service entity server when the called user logs on the network service entity server, and record a correspondence relation between the mobile terminal identification of the called user and the network service entity server; and a providing unit, configured to receive a request for acquiring network service entity server information corresponding to a mobile terminal identification of a called user and provide the network service entity server information corresponding to the mobile terminal identification of the called user through a correspondence relation between the mobile terminal identification of the called user and the network service entity server according to the request.

An embodiment of the disclosure provides a message center, including: a message receiving unit, configured to receive a message, wherein the receipt identification of the message is a mobile terminal identification of a called user; an acquiring unit, configured to acquire network service entity server information corresponding to the mobile terminal identification of the called user through a correspondence relation between the mobile terminal identification of the called user and the network service entity server recorded in a status recording device, wherein a correspondence relation between the mobile terminal identification of the called user and the network service entity server is recorded by the status recording device after the network service entity server transmits the mobile terminal identification of the called user associated with an identification of a network service entity client of the called user to the status recording device when the called user logs on the network service entity server; and a first message transmitting unit, configured to transmit the message to a network service entity server according to the network service entity information.

An embodiment of the disclosure provides a system for transmitting messages, including: a message center, configured to receive a message with a mobile terminal identification of a called user as a receipt identification, acquire network service entity server information corresponding to the mobile terminal identification of the called user through a correspondence relation between the mobile terminal identification of the called user and the network service entity server recorded in a status recording device, and transmit the message to a network service entity server according to the network service entity information; and the status recording device, configured to receive a mobile terminal identification of a called user with an identification of a network service entity client of a the called user transmitted by the network service entity server when the called user logs on the network service entity server, and record the correspondence relation between the mobile terminal identification of the called user and the network service entity server.

According to the method, device and system for transmitting messages provided in embodiments of the disclosure, network service entity information corresponding to a mobile terminal identification of a called user recorded in a status recording device is acquired. Thus, a calling user is allowed to transmit a message to a network service entity server corresponding to the mobile terminal identification of the called user by inputting the real mobile terminal identification of the called user on the mobile terminal.

### BRIEF DESCRIPTION OF THE DRAWINGS

Fig.1 is a flow chart of a method for transmitting messages according to an embodiment of the disclosure;

Fig.2 is a schematic structure diagram of a status recording device according to an embodiment of the disclosure;

Fig.3 is a schematic structure diagram of a status recording device according to another embodiment of the disclosure;

Fig.4 is a schematic structure diagram of a status recording device according to another embodiment of the disclosure;

Fig. 5 is a schematic structure diagram of a message center according to an embodiment of the disclosure;

Fig.6 is a schematic structure diagram of a message center according to another embodiment of the disclosure;

Fig.7 is a schematic structure diagram of a system for transmitting messages according to an embodiment of the disclosure;

Fig.8 is a flow chart of a method for transmitting messages according to an embodiment of the disclosure, in which a calling user and a called user belong to the same message center;

Fig.9 is a flow chart of a method for transmitting messages according to an embodiment of the disclosure, in which a calling user and a called user belong to different message centers;

Fig. 10 is a flow chart of a method for transmitting messages according to an embodiment of the disclosure, in which a calling user and a called user belong to different message centers and locate in a communication network to which the calling user belongs;

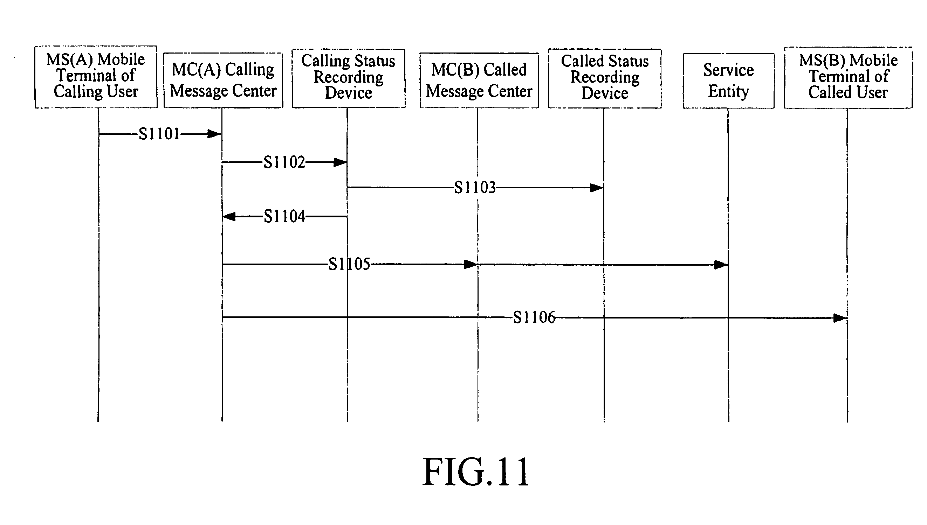

Fig. 11 is a flow chart of a method for transmitting messages according to another embodiment of the disclosure, in which a calling user and a called user belong to different message centers and locate in a communication network to which the calling user belongs; and

Fig. 12 is a flow chart of a method for transmitting messages according to another embodiment of the disclosure, in which a calling user and a called user belong to different message centers and locate in a communication network to which the calling user belongs.

### DETAILED DESCRIPTION

In order to make the objects, technical solutions and advantages of the disclosure clearer, the disclosure will be further described in detail below with reference to accompanying drawings and embodiments. It is understood that specific embodiments described here are only for illustrating the disclosure but not for limiting the disclosure.

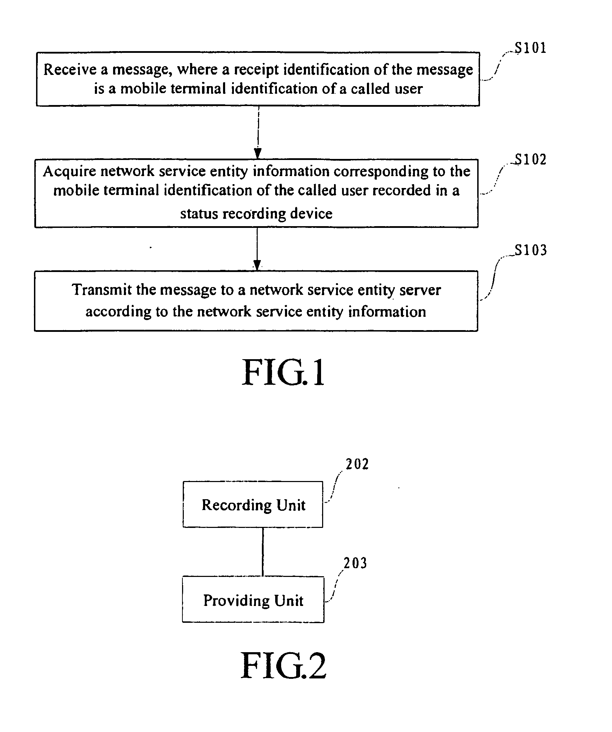

Fig.1 is a flow chart of a method for transmitting messages according to an embodiment of the disclosure, which includes the following steps.

S101: A message is received, where a receipt identification of the message is a mobile terminal identification of a called user.

A message center (MC) receives the message transmitted from a calling user A to a called user B.

The receipt identification of the message is the mobile terminal identification (such as a mobile telephone number) of the called user B. The calling user A may actively transmit the message to the called user B or reply the message to the called user B after receiving a message transmitted by the called user B. The called user B may transmit the message from a network service entity to the calling user A where the calling identification of the message is the real mobile terminal identification of the called user B (such as the real mobile telephone number of the called user B), or the called user B may transmit a short message on a mobile terminal.

S102: Network service entity information corresponding to the mobile terminal identification of the called user recorded in a status recording device is acquired;

In an embodiment of the disclosure, the network service entity may be an instant messaging tool (such as QQ), a website with message transmitting and receiving function, or a communicating tool with message transmitting and receiving function in a local area network.

When the called user logs on a network service entity server, the network service entity server transmits the mobile terminal identification of the called user associated with an identification of a network service entity client of the called user to the status recording device. The status recording device records a correspondence relation between the mobile terminal identification and the network service entity information. The network service entity information may be an identification of the network service entity (such as the name of the network service entity) or an IP address of the network service entity server. The mobile terminal identification of the called user is provided to the network service entity server by the called user, which corresponds to the identification of the network service entity client of the called user (such as a mobile telephone number corresponding to a bound QQ number).

After receiving the message that the receipt identification of the message is the mobile terminal identification of the called user, the message center requests to acquire the network service entity informations corresponding to the mobile terminal identification of the called user from the status recording device according to the mobile terminal identification of the called user. The status recording device looks up corresponding network service entity informations according to the correspondence relation between the recorded mobile terminal identification and the network service entity.

S103: The message is transmitted to the network service entity server according to the network service entity information.

After the message center acquires the network service entity information corresponding to the mobile terminal identification of the called user recorded in the status recording device successfully, the message center transmits the message to the network service entity server according to the network service entity information. If the message center fails to acquire the network service entity informations corresponding to the mobile terminal identification of the called user recorded in the status recording device, the message center transmits the message to the mobile terminal of the called user according to the mobile terminal identification of the called user.

When the network service entity communicates with the message center, the message center may record a correspondence relation between the identification of the network service entity server and the IP address of the network service entity server. When the network service entity informations acquired by the message center from the status recording device is the identification of the network service entity server, the message center obtains the corresponding IP address by the correspondence relation between the identification of the network service entity server and the IP address of the network service entity server and transmits the message to the network service entity server according to the IP address of the network service entity server.

In the present embodiment, through acquiring the corresponding network service entity information from the status recording device according to the mobile terminal identification of the called user, the calling user is allowed to transmit the message to the network service entity server associated with the called mobile terminal identification by inputting the called mobile terminal identification on a mobile terminal. In an embodiment of the disclosure, on-line status of a user on a certain network service entity may also be represented by data in the status recording device, thus enabling selecting a transmitting mode according to the on-line status of the called user on the network service entity. The specific implementation is as follows.

When the called user logs on the network service entity server, the status recording device receives the mobile terminal identification of the called user transmitted by the network service entity server and records the correspondence relation between the mobile terminal identification and the network service entity server.

When the called user logs off the network service entity server, the status recording device deletes the recorded correspondence relation between the mobile terminal identification and the network service entity server.

Thus, it is ensured that when the called user logs on a certain network service entity server and remains an on-line status, the message center may acquire the network service entity information corresponding to the mobile terminal identification of the called user recorded in the status recording device successfully, and thus S103 may be performed.

When the message center fails to acquire the network service entity information corresponding to the mobile terminal identification of the called user recorded in the status recording device, the message center transmits the message to the mobile terminal of the called user according to the mobile terminal identification of the called user.

Thus, the message center may transmit the message according to the on-line status of the called user on the network service entity server. That is, when the user is on-line on a certain network service entity server, the messages is transmitted to the network service entity server which in turn delivers the message to a client. And when the user is off-line, the message is delivered to the mobile terminal of the called user.

Particularly, if a mobile terminal identification of the user is bound to multiple network service entities, correspondence relations between the mobile terminal identification of the user and each piece of network service entity information may be recorded in the status recording device when the user is on-line on multiple network service entity servers. The status recording device may select any network service entity information from multiple correspondence relations to provide the network service entity information to the message center, or may also provide all the network service entity information indicating the called user is on-line to the message center which further selects one of them for delivering.

In addition, in specific implementation processes of S102~S103, if the calling user A and the called user B belong to the same message center, after receiving the message transmitted by the calling user A, the message center acquires the network service entity information corresponding to the mobile terminal identification of the called user from the status recording device of the called party. If the acquisition of the network service entity information is successful, S103 is performer, and if the acquisition of the network service entity information fails, the message center transmits the message to the mobile terminal of the called user B.

If the calling user A and the called user B belong to different message centers, two circumstances exist.

1. When it is a communication network, such as Code Division Multiple Access (CDMA) network, to which the called user belongs, a calling message center MC(A) transmits the message to a called message center MC(B). After receiving the message, the MC(B) acquires the network service entity information corresponding to the mobile terminal identification of the called user from the status recording device of the called party. If the acquisition of the network service entity information is successful, S103 is performer, and if the acquisition of the network service entity information fails, the MC(B) transmits the message to the mobile terminal of the called user B.

2. When it is a communication network, such as Global System for Mobile Communications (GSM) network, to which the calling user belongs, there are two following cases.

In the first case, the MC(A) acquires the network service entity information, corresponding to the mobile terminal identification of the called user from the status recording device of the called party through the MC(B). If the acquisition of the network service entity information is successful, the message is transmitted to the MC(B) which will perform S103. If the corresponding network service entity also communicates with the MC(A), the MC(A) may also perform S103 by itself. If the acquisition of the network service entity informations fails, the MC(A) transmits the message to the mobile terminal of the called user B.

In the second case, the calling party also corresponds to a status recording device. The MC(A) acquires the network service entity information corresponding to the mobile terminal identification of the called user from the status recording device of the called party through the status recording device. If the acquisition of the network service entity information is successful, the message is transmitted to the MC(B) which will perform S103. If the corresponding network service entity also communicates with the MC(A), the MC(A) may also perform S103 by itself. If the acquisition of the network service entity information fails, the MC(A) transmits the message to the mobile terminal of the called user B.

The acquired network service entity information may include the identification of the network service entity server or the IP address of the network service entity server.

If the network service entity information acquired by the message center is the identification of the network service entity server, the IP address of the network service entity server is recorded by the message center when the network service entity server communicates with the message center. The message center obtains the IP address of the corresponding network service entity server according to the received identification of the network service entity server and transmits the message to the network service entity server according to the IP address of the network service entity server.

The message center may not record the IP address of the network service entity server by itself, but acquires the IP address of the network service entity server from the status recording device by use of the mobile terminal identification of the called user. However, in this case, it is required that the server of the network service entity for transmitting messages to the status recording device and the server of the network service entity for receiving messages transmitted from the message center are of the same IP address.

To make the technical solution of the present embodiment clearer, description will be given below with respect to the case in which the calling user A and the called user B belong to the same message center. If a user logs on an QQ server with a QQ number 8888 through a QQ client and provides his/her mobile telephone number 13888888888 which is bound to the QQ number to the QQ server, and if the QQ number 8888 is on-line, the QQ server registers the mobile telephone number 13888888888 with the status recording device which then records a correspondence relation between the mobile telephone number 13888888888 and the QQ server.

Since the message center needs to communicate with the QQ server, the QQ server needs to communicate with the message center and then the message center records the IP address corresponding to the QQ server. When the message center acquires network service entity information from the status recording device by use of the called mobile telephone number 13888888888, if the QQ number 8888 is on-line, what is acquired is that the service entity corresponding to 13888888888 is the QQ server. Then the message center of the called party obtains the corresponding IP address according to previously recorded IP of the QQ server and transmits a message to the QQ server. If the QQ number 8888 is not on-line, the acquisition of the network service entity information fails. Since the status recording device now record no mapping relation between the mobile telephone number 13888888888 and the QQ server, the message center transmits the message to the mobile terminal corresponding to the mobile telephone number 13888888888 of the called user after receiving the message.

It should be noted that although the method for transmitting messages according to the present embodiment is illustrated in terms of the case in which the calling user A and the called user B belong to the same message center, the method for transmitting messages provided in the present embodiment is not limited to the case in which the calling user A and the called user B belong to the same message center, but also applicable to the case in which the calling user A and the called user B belong to different message centers, which will be described in detail in the following embodiment.

According to the method for transmitting messages provided in the present embodiment, when the calling user and the called user belong to the same message center or different message centers and locates in the network to which the calling user belongs or the delivering network to which the called user belongs, the calling user may input the mobile terminal identification of the called user (such as a mobile telephone number) on a mobile terminal so as to transmit the message to the network service entity server with which the called user has been registered, such that the network service entity server may transmit the message to the network service entity client of the called user. The method provided in the present embodiment makes the transmitting of messages to the network service entity server via the mobile terminal more convenient and simpler, and makes the user feel that the operation is as easy as transmitting short messages between mobile terminal, thus improving the user's experiences and promoting the popularization of this kind of service.

Further, since the status recording device records the correspondence relation between the mobile terminal identification of the called user and the network service entity server when the called user is on-line on the network service entity server, the message center is allowed to determine the receiving party of the message according to the on-line status of the called user on the network service entity server, thus improving the pertinence and timeliness of message delivering and guaranteeing that the called user may receive the message in time.

Corresponding to the above-mentioned method embodiment of the disclosure, Fig.2 is a schematic structure diagram of a status recording device according to an embodiment of the disclosure, which includes the following units.

A recording unit 202 is configured to receive the mobile terminal identification of the user transmitted by the network service entity server and record the correspondence relation between the mobile terminal identification of the user and the network service entity server.

When the user logs on the network service entity server, the network service entity server transmits the mobile terminal identification corresponding to the network service entity client of the called user to the status recording device.

The recording unit 202 records the correspondence relation between the mobile terminal identification of the user and the network service entity server after receiving the mobile terminal identification of the user transmitted by the network service entity server. What the recording unit 202 records may be the correspondence relation between the mobile terminal identification of the user and the identification of the network service entity server, or the correspondence relation between the mobile terminal identification of the called user and the IP address of the network service entity server.

A providing unit 203 is configured to receive a request for acquiring the network service entity information corresponding to the mobile terminal identification of the called user and provide the network service entity information corresponding to the mobile terminal identification of the user according to the request.

The network service entity information may be provided to the message center or another status recording device. The provided network service entity information may be the identification of the network service entity server or the address of the network service entity server.

The status recording device provided in the present embodiment may communicate with the network service entity, the message center or another status recording device through any private protocol or extensions of the existing protocol specifications of the carrier, such as the extension of the Data Center for Short Message Service (DCS) specification of the China Mobile Communication Co. Ltd.

The status recording device provided in the present embodiment records the correspondence relation between the mobile terminal identification of the called user and the network service entity and provides the network service entity information, thus allowing the message center to transmit the message to the corresponding network service entity server according to the mobile terminal identification of the called user.

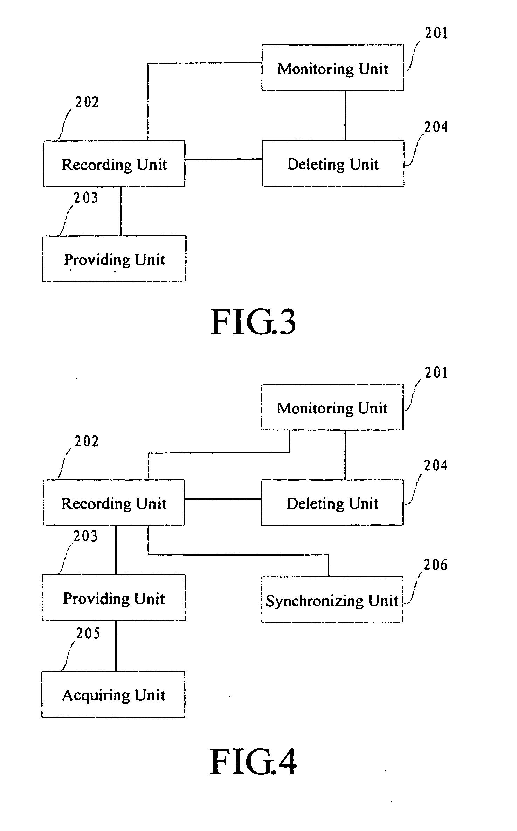

On the basis of the present embodiment, referring to Fig.3, the status recording device may further include a monitoring unit 201 and a deleting unit 204.

The monitoring unit 201 is configured to monitor the on-line status of the called user on the network service entity server.

The called user needs to provide his/her mobile terminal identification (such as a mobile telephone number, or a mobile telephone number bound with a QQ number) corresponding to the identification of the network service entity client to the network service entity with which the called user is registered. The network service entity stores the correspondence relation between the identification of the network service entity client and the mobile terminal identification in the server.

The monitoring unit 201 keeps real-time updating with the network service entity server corresponding to the mobile terminal identification of the called user, and thus the monitoring unit 201 may acknowledge whether the called user logs on the network service entity server currently. This may be implemented by the following two approaches.

1. When the called user logs on the network service entity server (that is, when the called user is on-line), the network service entity server transmits an on-line status notification of the called user to the monitoring unit 201. When the called user is off-line, the network service entity server transmits an off-line notification of the called user immediately to the monitoring unit 201. Then the monitoring unit 201 transmits the off-line notification of the called user to the deleting unit 204.

2. When the called user is off-line, the network service entity server does not transmit an off-line notification of the called user to the monitoring unit. When the called user is on-line, the network service entity server transmits an on-line status notification of the called user to the monitoring unit 201 in real-time. If the monitoring unit 201 fails to receive any more on-line status notification of the called user in a certain period (such as 30 seconds) after receiving the on-line status notification of the called user, the monitoring unit 201 determines that the called user is already off-line and thus transmits an off-line notification of the called user to the deleting unit 204.

The deleting unit 204 is configured to receive the off-line notification of the called user transmitted by the monitoring unit and delete the correspondence relation between the mobile terminal identification of the called user and the network service entity server recorded in the recording unit according to the off-line notification.

The status recording device provided in the present embodiment records the correspondence relation between the mobile terminal identification of the called user and the network service entity server when the user logs on the network service entity server and remains the on-line status, thus allowing the message center to determine the receiving party of the message according to the on-line status of the called user on the network service entity server, and thus improving the pertinence and timeliness of message delivering and guaranteeing that the called user may receive the message in time.

Referring to Fig.4, the status recording device may further include an acquiring unit 205 and/or a synchronizing unit 206.

The acquiring unit 205 is configured to acquire the network service entity information corresponding to the mobile terminal identification of the called user from another status recording device.

When receiving a request for acquiring the network service entity information corresponding to the mobile terminal identification of the called user, the providing unit 203 firstly checks whether the correspondence relation between the mobile terminal identification of the called user and the network service entity server is recorded in the recording unit. If the correspondence relation is recorded, the providing unit 203 acquires the correspondence relation and then provides it to the requester.

If the correspondence relation is not recorded, the providing unit 203 instructs the acquiring unit 205 to acquire the network service entity information corresponding to the mobile terminal identification of the called user from the another status recording device according to the request. After obtaining the instruction, the acquiring unit 205 acquires the network service entity information corresponding to the mobile terminal identification of the called user from the another status recording device.

The synchronizing unit 206 is configured to synchronously update the correspondence relation between the mobile terminal identification of the called user and the network service entity server to the another status recording device.

When the calling user A and the called user B belong to different message centers and locate in the delivering network to which the calling user A belongs, the calling message center may acquire, through the status recording device of the calling party, the correspondence relation between the mobile terminal identification of the called user and the network service entity server from the status recording device of the called party. The status recording device of the calling party may actively acquire the correspondence relation from the status recording device of the called party, where the status recording device of the calling party includes the acquiring unit 205. The status recording device of the called party may also actively update the correspondence relation between the mobile terminal identification of the called user and the network service entity server synchronously to the status recording device of the calling party, where the status recording device of the called party includes the synchronizing unit 206.

In this way, the message center of the calling party may acquire the correspondence relation between the mobile terminal identification of the called user and the network service entity server locally, thus enabling a faster and more convenient acquisition of the correspondence relation between the mobile terminal identification of the called user and the network service entity server by the message center of the calling party.

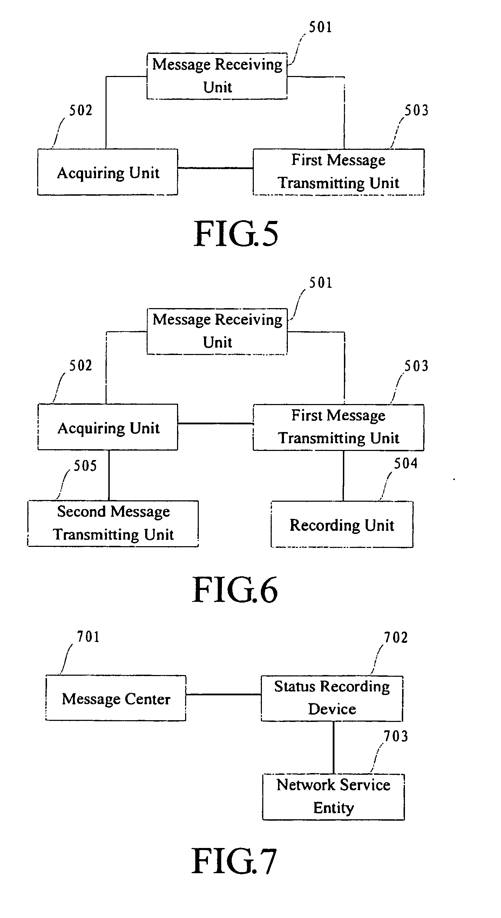

Corresponding to the above-mentioned method embodiment of the disclosure, Fig. 5 is a schematic structure diagram of a message center according to an embodiment of the disclosure, which includes the following units.

A message receiving unit 501 is configured to receive a message, where the receipt identification of the message is the mobile terminal identification of the called user.

The message receiving unit 501 may receive messages transmitted by the calling user, and may also receive messages forwarded by another message center, for example, a called message center may receive messages forwarded by a calling message center. The message takes the mobile terminal identification of the called user as the receipt identification, which means that when transmitting a message, the calling user needs to transmit the message to the mobile terminal of the called user in a way of transmitting a short message to a mobile terminal.

An acquiring unit 502 is configured to acquire the network service entity information corresponding to the mobile terminal identification of the called user recorded in the status recording device.

The acquiring unit 502 may acquire the network service entity information from the status recording device which records the network service entity information corresponding to the mobile terminal identification of the called user. It is also possible that another status recording device firstly acquires the network service entity information from the status recording device, and then the acquiring unit 502 of the message center acquires the network service entity information from the another status recording device (e.g. the calling message center acquires, through the status recording device of the calling party, the network service entity information from the status recording device of the called party). It is also possible that the acquiring unit 502 acquires the network service entity information corresponding to the mobile terminal identification of the called user recorded in the status recording device through another message center (e.g. the acquiring unit 502 of the calling message center acquires the network service entity information from the status recording device of the called party through the called message center).

The acquired network service entity information may be the identification of the network service entity server or the IP address of the network service entity server.

A first message transmitting unit 503 is configured to transmit the message to the network service entity server according to the network service entity information.

The message center provided in the present embodiment may communicate with the status recording device and the another message center through any private protocol or extensions of the existing protocol specifications of the carrier

On the basis of the present embodiment, as shown in Fig.6, the message center may further include a recording unit 504.

The recording unit 504 is configured to record the correspondence relation between the identification of the network service entity server and the IP address of the network service entity server.

The IP address of the network service entity server is recorded by the recording unit 504 when the network service entity server communicates with the message center.

If the network service entity information acquired by the acquiring unit 502 is the identification of the network service entity server, the first message transmitting unit 503 is specifically configured to inquire the IP address of the network service entity server from the recording unit 504 according to the identification of the network service entity server and transmit the message to the network service entity server according to the inquired IP address of the network service entity server.

The message center may further include a second message transmitting unit 505 configured to transmit the message to the mobile terminal of the called user according to the mobile terminal identification of the called user when the acquiring unit 502 fails to acquire the network service entity information corresponding to the mobile terminal identification of the called user.

The message center provided in the present embodiment facilitates to transmit the message of the calling user with the mobile terminal identification of the called user as the receipt identification to the network service entity server corresponding to the mobile terminal identification of the called user with which the called user is registered, such that the called user may receive the message at the service entity client. The present embodiment makes the transmitting of messages to the network service entity server via the mobile terminal more convenient and simpler, and makes the user feel that the operation is as easy as transmitting short messages between mobile terminals, thus improving the user's experiences and promoting the popularization of this kind of service.

Further, the message center provided in the present embodiment may also determine the receiving party of the message according to the on-line status of the network service entity client of the called user. If the called user is on-line, the receiving party of the message is the network service entity server with which the called user is registered, and if the called user is off-line, the receiving party of the message is the mobile terminal of the user, thus guaranteeing that the called user may receive the message in time.

Fig.7 is a schematic structure diagram of a system for transmitting messages according to an embodiment of the disclosure,

The system includes a message center 701 configured to transmit and receive a message in which the receipt identification of the message is a mobile terminal identification of a called user, acquire network service entity information corresponding to the mobile terminal identification of the called user recorded in a status recording device, and transmit the message to a network service entity server according to the network service entity information.

The message center 701 may be a message center MC to which a calling user and a called user commonly belong, a message center MC(A) to which the calling user belongs or a message center MC(B) to which the called user belongs.

After receiving the message transmitted from the calling user, the message center MC to which the calling user and the called user commonly belong acquires the network service entity information corresponding to the mobile terminal identification of the called user from the corresponding status recording device.

When the calling user A and the called user B belong to different message centers, the following circumstances exist.

In a delivering network to which the called user belongs, after receiving the message transmitted from the MC(A), the MC(B) acquires the network service entity information corresponding to the mobile terminal identification of the called user from the corresponding status recording device of the called party.

In a delivering network to which the calling user belongs, the MC(A) may acquire, through the MC(B), the network service entity information corresponding to the mobile terminal identification of the called user from the status recording device corresponding to the called party, and may also acquire, through the status recording device of the calling party corresponding to the MC(A), the network service entity information from the status recording device corresponding to the called party.

The message center 701 may be further configured to store a correspondence relation between an identification of the network service entity server and an IP address of the network service entity server, and inquire the IP address of the network service entity server corresponding to the server according to the acquired identification of the network service entity server so as to transmit the message according to the IP address of the network service entity server.

A status recording device 702 is configured to receive a mobile terminal identification of a user transmitted by the network service entity server and record a correspondence relation between the mobile terminal identification of the user and the network service entity server.

There may be one status recording device in the system (e.g. when the calling user A and the called user B belong to the same message center), or two and more status recording devices (e.g. when the calling user A and the called user B belong to different message centers and locate in the delivering network to which the calling user belongs. The status recording device keeps in real-time communication with the network service entity server, monitors an on-line status of the network service entity user bound with a mobile terminal identification, receives the mobile terminal identification corresponding to a network service entity client of the user transmitted by the network service entity server, and records the correspondence relation between the mobile terminal identification of the user and the network service entity server when the user is on-line. The specific implementation process has been described in detail in the previous embodiment of a status recording device and thus will not be further described here.

When the calling user A and the called user B belong to different message centers and locate in the delivering network to which the calling user belongs, the called party has one status recording device and the calling party may also have one status recording device. Besides the above-mentioned functions performed by the status recording device of the calling party, when the MC(A) acquires, through the status recording device of the calling party, the network service entity information corresponding to the mobile terminal identification of the called user from the status recording device of the called party, the status recording device of the calling party needs to communicate with the status recording device of the called party to acquire the network service entity information corresponding to the mobile terminal identification of the called user recorded in the status recording device of the called party. The communication between the status recording device of the calling party and the status recording device of the called party may be realized by the following two approaches. In the first approach, when obtaining a instruction of the MC(A), the status recording device of the calling party actively transmits a request for acquiring the corresponding network service entity information to the status recording device of the called party to acquire the information and then returns the information to the MC(A). In the second approach, the status recording device of the called party synchronously updates the correspondence relation between the mobile terminal identification of the called user and the network service entity server recorded locally to the status recording device of the calling party. Through the second approach, the MC(A) may inquire in the local status recording device to acquire the network service entity information corresponding to the mobile terminal identification of the called user.

As for the implementation, the status recording device 702 may be an independent network element in the system or a module in the message center 701.

The system for transmitting messages provided in the present embodiment may be applied in different networks, such as a network in which the calling user and the called user belong to the same message center or a network in which the calling user and the called user belong to different message centers (including the delivering network to which the calling user belongs and the network to which the called user belongs). The system facilitates to transmit the message of the calling user with the mobile terminal identification of the called user as the receipt identification to the network service entity server corresponding to the mobile terminal identification of the called user with which the called user is registered, such that the called user may receive the message at the service entity client. The present embodiment makes the transmitting of messages to the network service entity server via the mobile terminal more convenient and simpler, and makes the user feel that the operation is as easy as transmitting short messages between mobile terminals, thus improving the user's experiences and promoting the popularization of this kind of service.

The system for transmitting messages may further include a network service entity server 703 configured to transmit the mobile terminal identification associated with the network service entity client of the user to the status recording device 702 when the user logs on the network service entity server.

The status recording device 702 is further configured to delete the correspondence relation between the mobile terminal identification of the user and the network service entity server recorded locally when the user is off-line on the network service entity server.

Thus, it is realized that when the user is on-line on the network service entity server, the status recording device 702 may record the correspondence relation between the mobile terminal identification of the user and the network service entity server, and the message center may acquire the network service entity information corresponding to the mobile terminal identification of the called user from the status recording device 702. Then the message center may determine whether the message is transmitted to the network service entity server or the mobile terminal of the called user according to whether the acquisition of the network service entity information is successful.

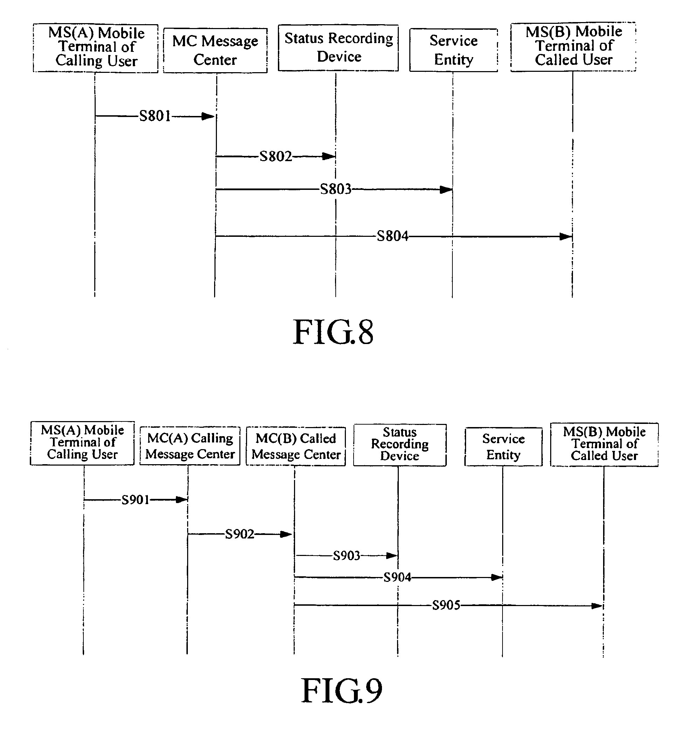

Fig.8 is a flow chart of a method for transmitting messages according to an embodiment of the disclosure, in which a calling user and a called user belong to the same message center.

S801: A calling user A transmits a message to a called user B via a mobile terminal and the message is firstly received by a message center.

The receipt identification of the message is a mobile terminal identification of the called user B.

The called user B needs to provide the mobile terminal identification associated with an identification of a network service entity client with which the called user B is registered to the network service entity, and the network service entity transmits the mobile terminal identification to a status recording device. Thus, the status recording device records that the mobile terminal identification corresponds to the network service entity. Moreover, the service entity needs to notify an on-line status of the called user B to the status recording device, specific process of which has been described in the previous embodiment of the status recording device and thus will not be described further here.

The calling user A may transmit the message to the called user B via the mobile terminal actively, or may reply after receiving a message transmitted to the mobile terminal of the calling user A by the called user B on the network service entity. The transmitting identification of the message of the called user B received by the calling user A is a real mobile terminal identification of the called user B (such as a mobile telephone number of the called user B without any access code and other characters).

The process for the called user B to transmit a message to the mobile terminal of the calling user A on the network service entity is as follows.

The called user B logs on the network service entity and transmits the message to the mobile terminal of the calling user A (the called user B has already provided the mobile terminal identification associated with an identification of its network service entity client to the network service entity). The message is firstly received by the network service entity server. The service entity server parses the message, obtains the associated mobile terminal identification according to the identification of the network service entity client of the called user B, sets a calling number in the message as the mobile terminal identification and transmits the message to the message center to which the calling user A belongs. The message center transmits the message to the mobile terminal of the calling user A. Thus, when the calling user A receives the message, the calling number displayed on the mobile terminal of the calling user A is the mobile terminal identification of the called user B, and thus the calling user A may reply by use of the mobile terminal identification as a called number.

S802: The message center acquires the network service entity information corresponding to the mobile terminal identification of the called user B from the corresponding status recording device.

The network service entity server information acquired by the message center from the status recording device may be an identification of the network service entity server or an IP address of the network service entity server. If the identification of the network service entity server is acquired, the message center further needs to obtain the IP address of the network service entity server stored locally according to the identification of the network service entity server so as to transmit the message to the network service entity server according to the address. In order to communicate with the message center, the network service entity server needs to communicates with the message center which stores the IP address of the network service entity server.

If the IP address of the network service entity server is acquired by the message center, the message center transmits the message to the network service entity server according to the address. However, in this case, some limitations may be imposed on the network service entity. It is required that the network service entity server for transmitting messages to a status managing device and the network service entity server for receiving messages transmitted from the message center are the same server.

S803: If the acquisition of the network service entity information is successful, the message center transmits the message to the network service entity server.

A successful acquisition means that the called user B logs on the network service entity server currently, and thus the message center transmits the message to the network service entity server on which the called user B logs such that the called user B may receive the message in time.

S804: If the acquisition of the network service entity information fails, the message center transmits the message to the mobile terminal identification of the called user B.

A failed acquisition means that the called user B has not logged on the network service entity server currently. Since the status recording device monitors the on-line status of the called user B on the network service entity in real-time, if the called user B is found off-line, the status recording device would delete the correspondence relation between the network service entity server and the mobile terminal identification of the called user B recorded in it. Refer to the embodiment of the status recording device for specific implementation process.

According to the method for transmitting messages provided in the present embodiment, when the calling user and the called user belong to the same message center, the calling user may input the mobile terminal identification of the called user for transmitting a message to the network service entity. The receiving party of the message may be selected automatically according to the on-line status of the user, thus ensuring that the user can receive the message in time.

Fig.9 is a flow chart of a method for transmitting messages according to an embodiment of the disclosure, in which a calling user and a called user belong to different message centers.

In the present embodiment, the calling user and the called user belong to different message centers, and locate in a communication network to which the called user belongs (such as a CDMA network).

S901: The calling user A transmits a message to the called user B via a mobile terminal, and the message is firstly received by a message center MC(A) to which the calling user belongs.

The receipt identification of the message is the mobile terminal identification of the called user B.

The details of this step may be referred to those in S801 except that the message center is the message center MC(A) to which the calling user belongs.

S902: After receiving the message, the MC(A) forwards the message to a message center MC(B) to which the called user belongs.

S903: After receiving the message, the MC(B) acquires network service entity information corresponding to a mobile terminal identification the called user B from its corresponding status recording device.

The details of this step may be referred to those in S802 except that the message center is the message center MC(B) to which the called user belongs.

S904: If the acquisition of the network service entity information is successful, the MC(B) transmits the message to a network service entity server.

The details of this step may be referred to those in S803 except that the message center is the message center MC(B) to which the called user belongs.

S905: If the acquisition of the network service entity information fails, the MC(B) transmits the message to the mobile terminal identification of the called user B.

The details of this step may be referred to those in S804 except that the message center is the message center MC(B) to which the called user belongs.

According to the method for transmitting messages provided in the present embodiment, when the calling user and the called user belong to different message centers and locate in the delivering network to which the called user belongs, the calling user may input the mobile terminal identification of the called user for transmitting a message to the network service entity. The receiving party of the message may be selected automatically according to the on-line status of the user, thus ensuring that the user can receive the message in time.

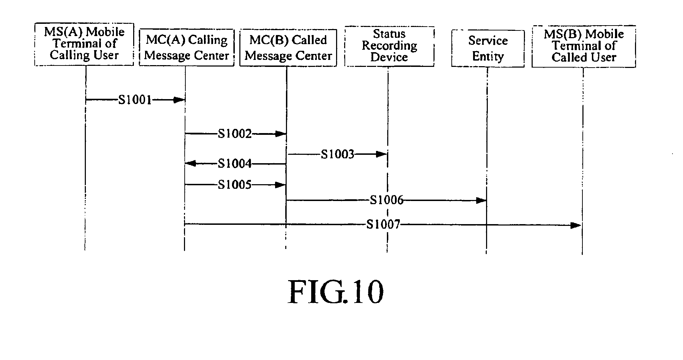

Fig. 10 is a flow chart of a method for transmitting messages according to an embodiment of the disclosure, in which a calling user and a called user belong to different message centers and locate in a communication network to which the calling user belongs.

In the present embodiment, the calling user and the called user belong to different message centers, and locate in a communication network to which the calling user belongs (such as a CDMA network).

S1001: The calling user A transmits a message to the called user B via a mobile terminal, and the message is firstly received by a message center MC(A) to which the calling user belongs.

The receipt identification of the message is a mobile terminal identification of the called user B.

The details of this step may be referred to those in S801 except that the message center is the message center MC(A) to which the calling user belongs.

S1002: After receiving the message, the MC(A) transmits a request for acquiring the network service entity information corresponding to the mobile terminal identification of the called user B to the MC(B).

S1003: After receiving the request, the MC(B) requests a corresponding status recording device of the called party to acquire the network service entity information corresponding to the mobile terminal identification of the called user B.

This step may be referred to S903.

S 1004: The MC(B) returns a response for the request to the MC(A).

If the acquisition of the network service entity information is successful, the MC(B) returns the network service entity information corresponding to the mobile terminal identification of the called user B to the MC(A).

If the acquisition of the network service entity information fails, the MC(B) returns a failure message to the MC(A).

S1005: The MC(A) receives the network service entity information corresponding to the mobile terminal identification of the called user B and transmits the message to the MC(B).

S1006: The MC(B) transmits the message to a network service entity server.

If the network service entity server information received by the MC(B) is an identification of the network service entity server, the MC(B) looks for an IP address of the network service entity server stored locally according to the identification. The message is transmitted to the network service entity server according to the IP address.

S1007: If the MC(A) receives a response of acquisition failure, the MC(A) delivers the message to the mobile terminal of the called user B.

According to the method for transmitting messages provided in the present embodiment, when the calling user and the called user belong to different message centers and locate in the delivering network to which the calling user belongs, the message center to which the calling user belongs may acquire, through the message center of the called user, the network service entity information corresponding to the mobile terminal identification of the called user B from the corresponding status recording device, and the calling user may input the mobile terminal identification of the called user for transmitting a message to the network service entity. The receiving party of the message may be selected automatically according to the on-line status of the user, thus ensuring that the user can receive the message in time.

Fig.1 1 is a flow chart of a method for transmitting messages according to another embodiment of the disclosure, in which a calling user and a called user belong to different message centers and locate in a communication network to which the calling user belongs.

S101: The calling user A transmits a message to the called user B via a mobile terminal, and the message is firstly received by a message center MC(A) to which the calling user belongs.

The receipt identification of the message is a mobile terminal identification of the called user B.

The details of this step may be referred to those in S801 except that the message center is the message center MC(A) to which the calling user belongs.

S1102: After receiving the message, the MC(A) transmits a request for acquiring the network service entity information corresponding to the mobile terminal identification of the called user B to a status recording device of the calling party corresponding to the MC(A).

S1103: After receiving the request, the status recording device of the calling party requests a status recording device of the called party to acquire the network service entity information corresponding to the mobile terminal identification of the called user B.

In the present embodiment, the status recording device of the calling party corresponding to the MC(A) may communicate with the status recording device of the called party through any private protocol or extensions of the existing protocol specifications of the carrier (such as the extension of the DCS specification of the China Mobile Communication Co. Ltd, the EMP specification of the China United Telecommunications Co. Ltd, the MSP specification of the China Telecommunications Corporation, and so on).

What the status recording device of the calling party acquires may be an identification or an IP address of the network service entity server corresponding to the mobile terminal identification of the called user B.

S1104: The status recording device of the calling party transmits an acquisition response to the MC(A).

If the acquisition of the network service entity information is successful, the network service entity information corresponding to the mobile terminal identification of the called user B is returned to the MC(A).

If the acquisition of the network service entity information fails, a failure message is returned to the MC(A).

S1105: After receiving the network service entity information corresponding to the mobile terminal identification of the called user B, the MC(A) transmits the message to the MC(B) which further transmits the message to the network service entity server.

The message carries the network service entity information corresponding to the mobile terminal identification of the called user B.

The MC(B) transmits the message to the network service entity server according to the carried network service entity information corresponding to the mobile terminal identification of the called user B.

If the network service entity server information carried in the message is the identification of the network service entity server, the MC(B) obtains the corresponding IP address of the network service entity server according to the identification and transmits the message to the network service entity server.

After receiving the network service entity server information, the MC(A) may firstly inquire locally whether there is a network service entity server corresponding to the information in the network service entity servers communicating with the MC(A). If there is a network service entity server corresponding to the information, the message may also be transmitted to this network service entity server.

S1106: The MC(A) receives a response of acquisition failure and delivers the message to the mobile terminal of the called user B.

According to the method for transmitting messages provided in the present embodiment, when the calling user and the called user belong to different message centers and locate in the delivering network to which the calling user belongs, the message center to which the calling user belongs acquires, through its corresponding message center, the network service entity information corresponding to the mobile terminal identification of the called user from the status recording device corresponding to the called message center, and thus the calling user may input the mobile terminal identification of the called user for transmitting a message to the network service entity. The receiving party of the message may be selected automatically according to the on-line status of the user, thus ensuring that the user can receive the message in time.

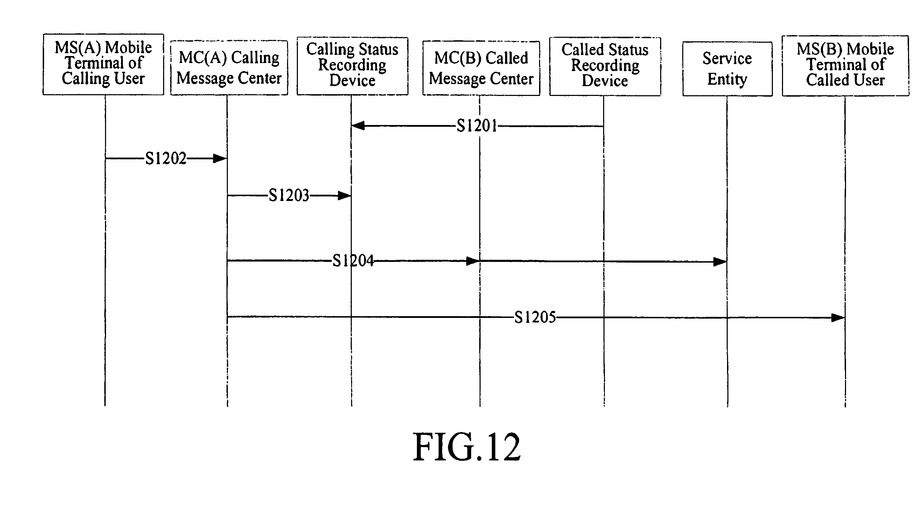

Fig.12 is a flow chart of a method for transmitting messages according to another embodiment of the disclosure, in which a calling user and a called user belong to different message centers and locate in a communication network to which the calling user belongs.

S1201: A status recording device of the called party synchronously updates a recorded mobile terminal identification of the called party and its corresponding network service entity information to a status recording device of the calling party.

When the called party B is transmitting a message to a mobile terminal of the calling party A from a network entity terminal, the status recording device of the called party may obtain the status recording device of the calling party and perform this step. Alternatively, the status recording device of the called party may also synchronously update all other status recording devices in the network.

S1202: The calling user A transmits a message to the called user B via a mobile terminal, and the message is firstly received by the message center MC(A) to which the calling user belongs.

The receipt identification of the message is the mobile terminal identification of the called user B.

The details of this step may be referred to those in S801 except that the message center is a message center MC(A) to which the calling user belongs.

S1203: The MC(A) acquires network service entity information corresponding to the mobile terminal identification of the called user B from its corresponding status recording device of the calling party.

Since the status recording device of the calling party has already synchronously updated the network service entity information corresponding to the mobile terminal identification of the called user stored in it, the MC(A) may acquire the information locally. This step may be referred to S802.

S1204: After receiving the network service entity information corresponding to the mobile terminal identification of the called user B, the MC(A) transmits the message to the MC(B) which further transmits the message to a network service entity server.

This step may be referred to S1105.

S1205: The MC(A) receives a response of acquisition failure and delivers the message to a mobile terminal of the called user B.

According to the method for transmitting messages provided in the present embodiment, when the calling user and the called user belong to different message centers and locate in the delivering network to which the calling user belongs, through synchronously updating the status recording device of the calling party and the status recording device of the called party, the message center to which the calling user belongs may acquire the network service entity information corresponding to the mobile terminal identification of the called user from the local status recording device, and thus the calling user may input the mobile terminal identification of the called user for transmitting a message to the network service entity. The receiving party of the message may be selected automatically according to the on-line status of the user, thus ensuring that the user can receive the message in time.

Through the description of the above embodiments, it would be clearly understood by those skilled in the art that the embodiments of the disclosure may be implemented by software and necessary general purpose hardware platform without the need of introduction of independent functional components. Based on such understanding, the essence or the content contributing to the related art of the technical solution of the embodiments of the disclosure may be embodied in form of computer software product. The computer software product is stored in a storage medium and includes several instructions for implementing the methods described in the embodiments of the disclosure. The storage medium mentioned here is, for example, ROM/RAM, magnetic disk, compact disk, and so on.

To sum up, the above contents are preferred embodiments of the disclosure and do not intend to limit the scope of the disclosure. Any modifications, equivalent replacements and improvements within the principle of the disclosure should be included in the scope of the disclosure as defined by the appended claims.

## Claims

1. A method for transmitting messages, comprising:
receiving (s101), by a message center, MC, a message, wherein a receipt identification of the message is a mobile terminal identification of a called user;
acquiring (s102), by the MC, network service entity server information corresponding to the mobile terminal identification of the called user through a correspondence relation between the mobile terminal identification of the called user and the network service entity server recorded in a status recording device wherein the correspondence relation between the mobile terminal identification of the called user and the network service entity server is recorded by the status recording device after the network service entity server transmits the mobile terminal identification of the called user associated with an identification of a network service entity client of the called user to the status recording device when the called user logs on the network service entity server; and
transmitting (s103), by the MC, the message to the network service entity server according to the network service entity server information.

2. The method of claim 1, wherein the correspondence relation between the mobile terminal identification of the called user and the network service entity server is deleted by the status recording device when the called user logs off the network service entity server.

3. The method of claim 1, further comprising:
transmitting (s804,s905,s1003) the message to the mobile terminal of the called user according to the mobile terminal identification of the called user when failing to acquire the network service entity server information corresponding to the mobile terminal identification of the called user recorded in the status recording device.

4. The method of claim 1, wherein the network service entity server information is an identification of the network service entity server or an IP address of the network service entity server.

5. The method of claim 4, further comprising recording the IP address corresponding to the identification of the network service entity server when the network service entity server communicates with a message center, and
if the network service entity server information is the identification of the network service entity server, the transmitting the message to the network service entity server of the called user according to the network service entity server information comprises: obtaining the corresponding IP address according to the received identification of the network service entity server and transmitting the message to the network service entity server of the called user according to the IP address of the network service entity server.

6. A status recording device, comprising:
a recording unit (202), configured to receive a mobile terminal identification of a called user with an identification of a network service entity client of a the called user transmitted by a network service entity server when the called user logs on the network service entity server, and record a correspondence relation between the mobile terminal identification of the called user and the network service entity server; and
a providing unit (203), configured to receive a request for acquiring network service entity server information corresponding to a mobile terminal identification of a called user and provide the network service entity server information corresponding to the mobile terminal identification of the called user through a correspondence relation between the mobile terminal identification of the called user and the network service entity server recorded in a status recording device according to the request.

7. The status recording device of claim 6, wherein the providing unit is further configured to instruct an acquiring unit to acquire the network service entity server information corresponding to the mobile terminal identification of the called user from another status recording device according to the request, and
the status recording device further comprises the acquiring unit(205) configured to acquire the network service entity server information corresponding to the mobile terminal identification of the called user from the another status recording device.

8. The status recording device of claim 6, further comprising:
a synchronizing unit (206), configured to synchronously update the correspondence relation between the mobile terminal identification of the user and the network service entity server to the another status recording device.

9. The status recording device of any one of claims 6 to 8, further comprising:
a monitoring unit (201), configured to monitor the on-line status of the user on the network service entity server; and
a deleting unit (204), configured to receive a off-line notification of the user transmitted by the monitoring unit and delete the correspondence relation between the mobile terminal identification of the user and the network service entity server recorded in the recording unit according to the off-line notification.

10. A message center, comprising:
a message receiving unit (501), configured to receive a message, wherein a receipt identification of the message is a mobile terminal identification of a called user;
an acquiring unit (502), configured to acquire network service entity server information corresponding to the mobile terminal identification of the called user through a correspondence relation between the mobile terminal identification of the called user and the network service entity server recorded in a status recording device, wherein a correspondence relation between the mobile terminal identification of the called user and the network service entity server is recorded by the status recording device after the network service entity server transmits the mobile terminal identification of the called user associated with an identification of a network service entity client of the called user to the status recording device when the called user logs on the network service entity server; and
a first message transmitting unit (503), configured to transmit the message to a network service entity server according to the network service entity server information.

11. The message center of claim 10, further comprising:
a second message transmitting unit (505), configured to transmit the message to the mobile terminal of the called user according to the mobile terminal identification when the acquiring unit fails to acquire the network service entity server information corresponding to the mobile terminal identification of the called user.

12. The message center of claim 10, further comprising a recording unit (504) configured to record a correspondence relation between an identification of the network service entity server and an IP address of the network service entity server, and
if the network service entity server information is the identification of the network service entity server, the first message transmitting unit is specifically configured to inquire the IP address of the network service entity server from the recording unit according to the identification of the network service entity server and transmit the message to the network service entity server according to the inquired IP address of the network service entity server.

13. A system for transmitting messages, comprising:
a message center (701), configured to receive a message with a mobile terminal identification of a called user as a receipt identification, acquire network service entity server information corresponding to the mobile terminal identification of the called user through a correspondence relation between the mobile terminal identification of the called user and the network service entity server recorded in a status recording device, and transmit the message to a network service entity server according to the network service entity server information; and
the status recording device(702), configured to receive a mobile terminal identification of a called user with an identification of a network service entity client of a the called user transmitted by the network service entity server when the called user logs on the network service entity server, and record the correspondence relation between the mobile terminal identification of the called user and the network service entity server.

14. The system for transmitting messages of claim 13, further comprising the network service entity server (703) configured to transmit the mobile terminal identification of the called user associated with a network service entity client of the user to the status recording device when the user logs on the network service entity server, and
the status recording device is further configured to delete the correspondence relation between the mobile terminal identification of the user and the network service entity server recorded locally when the user logs off the network service entity server.

## Patentansprüche

1. Verfahren zum Senden von Nachrichten, mit den folgenden Schritten:
Empfangen (s101) einer Nachricht durch eine Nachrichtenzentrale MC, wobei eine Empfangsidentifikation der Nachricht eine Mobilendgeräteidentifikation eines angerufenen Benutzers ist;
Beschaffen (s102) von Netzdienstentitätsserverinformationen, die der Mobilendgeräteidentifikation des angerufenen Benutzers entsprechen, durch die MC durch eine in einer Statusaufzeichnungseinrichtung aufgezeichnete Korrespondenzbeziehung zwischen der Mobilendgeräteidentifikation des angerufenen Benutzers und dem Netzdienstentitätsserver, wobei die Korrespondenzbeziehung zwischen der Mobilendgeräteidentifikation des angerufenen Benutzers und dem Netzdienstentitätsserver durch die Statusaufzeichnungseinrichtung aufgezeichnet wird, nachdem der Netzdienstentitätsserver die Mobilendgeräteidentifikation des angerufenen Benutzers, die mit einer Identifikation eines Netzdienstentitäts-Clients des angerufenen Benutzers assoziiert ist, zu der Statusaufzeichnungseinrichtung sendet, wenn sich der angerufene Benutzer bei dem Netzdienstentitätsserver anmeldet; und
Senden (s103) der Nachricht durch die MC zu dem Netzdienstentitätsserver gemäß den Netzdienstentitätsserverinformationen.

2. Verfahren nach Anspruch 1, wobei die Korrespondenzbeziehung zwischen der Mobilendgeräteidentifikation des angerufenen Benutzers und dem Netzdienstentitätsserver durch die Statusaufzeichnungseinrichtung gelöscht wird, wenn sich der angerufene Benutzer von dem Netzdienstentitätsserver abmeldet.

3. Verfahren nach Anspruch 1, ferner mit dem folgenden Schritt:
Senden (s804, s905, s1003) der Nachricht zu dem mobilen Endgerät des angerufenen Benutzers gemäß der Mobilendgeräteidentifikation des angerufenen Benutzers, wenn die in der Statusaufzeichnungseinrichtung aufgezeichneten Netzdienstentitätsserverinformationen, die der Mobilendgeräteidentifikation des angerufenen Benutzers entsprechen, nicht beschafft werden können.

4. Verfahren nach Anspruch 1, wobei die Netzdienstentitätsserverinformationen eine Identifikation des Netzdienstentitätsservers oder eine IP-Adresse des Netzdienstentitätsservers sind.

5. Verfahren nach Anspruch 4, ferner mit dem Schritt des Aufzeichnens der IP-Adresse, die der Identifikation des Netzdienstentitätsservers entspricht, wenn der Netzdienstentitätsserver mit einer Nachrichtenzentrale kommuniziert, und
wobei, wenn die Netzdienstentitätsserverinformationen die Identifikation des Netzdienstentitätsservers sind, das Senden der Nachricht zu dem Netzdienstentitätsserver des angerufenen Benutzers gemäß den Netzdienstentitätsserverinformationen Folgendes umfasst: Erhalten der entsprechenden IP-Adresse gemäß der empfangenen Identifikation des Netzdienstentitätsservers und Senden der Nachricht zu dem Netzdienstentitätsserver des angerufenen Benutzers gemäß der IP-Adresse des Netzdienstentitätsservers.

6. Statusaufzeichnungseinrichtung, umfassend:
eine Aufzeichnungseinheit (202), die dafür ausgelegt ist, eine Mobilendgeräteidentifikation eines angerufenen Benutzers mit einer Identifikation eines Netzdienstentitäts-Clients des angerufenen Benutzers zu empfangen, die durch einen Netzdienstentitätsserver gesendet wird, wenn sich der angerufene Benutzer bei dem Netzdienstentitätsserver anmeldet, und eine Korrespondenzbeziehung zwischen der Mobilendgeräteidentifikation des angerufenen Benutzers und dem Netzdienstentitätsserver aufzuzeichnen; und
eine Bereitstellungseinheit (203), die dafür ausgelegt ist, eine Anforderung zu empfangen, Netzdienstentitätsserverinformationen zu beschaffen, die einer Mobilendgeräteidentifikation eines angerufenen Benutzers entsprechen, und die Netzdienstentitätsserverinformationen, die der Mobilendgeräteidentifikation des angerufenen Benutzers entsprechen, durch eine in einer Statusaufzeichnungseinrichtung aufgezeichnete Korrespondenzbeziehung zwischen der Mobilendgeräteidentifikation des angerufenen Benutzers und dem Netzdienstentitätsserver gemäß der Anforderung bereitzustellen.

7. Statusaufzeichnungseinrichtung nach Anspruch 6, wobei die Bereitstellungseinheit ferner dafür ausgelegt ist, eine Beschaffungseinheit anzuweisen, die Netzdienstentitätsserverinformationen, die der Mobilendgeräteidentifikation des angerufenen Benutzers entsprechen, von einer anderen Statusaufzeichnungseinrichtung gemäß der Anforderung zu beschaffen, und
die Statusaufzeichnungseinrichtung ferner die Beschaffungseinheit (205) umfasst, die dafür ausgelegt ist, die Netzdienstentitätsserverinformationen, die der Mobilendgeräteidentifikation des angerufenen Benutzers entsprechen, von der anderen Statusaufzeichnungseinrichtung zu beschaffen.

8. Statusaufzeichnungseinrichtung nach Anspruch 6, ferner umfassend:
eine Synchronisiereinheit (206), die dafür ausgelegt ist, die Korrespondenzbeziehung zwischen der Mobilendgeräteidentifikation des Benutzers und dem Netzdienstentitätsserver synchron auf die andere Statusaufzeichnungseinrichtung zu aktualisieren.

9. Statusaufzeichnungseinrichtung nach einem der Ansprüche 6 bis 8, ferner umfassend:
eine Überwachungseinheit (201), die dafür ausgelegt ist, den Online-Status des Benutzers auf dem Netzdienstentitätsserver zu überwachen; und
eine Löscheinheit (204), die dafür ausgelegt ist, eine durch die Überwachungseinheit gesendete Offline-Benachrichtigung des Benutzers zu empfangen und die in der Aufzeichnungseinheit aufgezeichnete Korrespondenzbeziehung zwischen der Mobilendgeräteidentifikation des Benutzers und dem Netzdienstentitätsserver gemäß der Offline-Benachrichtigung zu löschen.

10. Nachrichtenzentrale, umfassend:
eine Nachrichtenempfangseinheit (501), die dafür ausgelegt ist, eine Nachricht zu empfangen, wobei eine Empfangsidentifikation der Nachricht eine Mobilendgeräteidentifikation eines angerufenen Benutzers ist;
eine Beschaffungseinheit (502), die dafür ausgelegt ist, durch eine in einer Statusaufzeichnungseinrichtung aufgezeichnete Korrespondenzbeziehung zwischen der Mobilendgeräteidentifikation des angerufenen Benutzers und dem Netzdienstentitätsserver Netzdienstentitätsserverinformationen zu beschaffen, die der Mobilendgeräteidentifikation des angerufenen Benutzers entsprechen, wobei eine Korrespondenzbeziehung zwischen der Mobilendgeräteidentifikation des angerufenen Benutzers und dem Netzdienstentitätsserver durch die Statusaufzeichnungseinrichtung aufgezeichnet wird, nachdem der Netzdienstentitätsserver die Mobilendgeräteidentifikation des angerufenen Benutzers, die mit einer Identifikation eines Netzdienstentitäts-Clients des angerufenen Benutzers assoziiert ist, zu der Statusaufzeichnungseinrichtung sendet, wenn sich der angerufene Benutzer bei dem Netzdienstentitätsserver anmeldet; und
eine erste Nachrichtensendeeinheit (503), die dafür ausgelegt ist, die Nachricht gemäß den Netzdienstentitätsserverinformationen zu einem Netzdienstentitätsserver zu senden.

11. Nachrichtenzentrale nach Anspruch 10, ferner umfassend:
eine zweite Nachrichtensendeeinheit (505), die dafür ausgelegt ist, die Nachricht gemäß der Mobilendgeräteidentifikation zu dem mobilen Endgerät des angerufenen Benutzers zu senden, wenn die Beschaffungseinheit die Netzdienstentitätsserverinformationen, die der Mobilendgeräteidentifikation des angerufenen Benutzers entsprechen, nicht beschaffen kann.

12. Nachrichtenzentrale nach Anspruch 10, ferner umfassend eine Aufzeichnungseinheit (504), die dafür ausgelegt ist, eine Korrespondenzbeziehung zwischen einer Identifikation des Netzdienstentitätsservers und einer IP-Adresse des Netzdienstentitätsservers aufzuzeichnen, und
wobei, wenn die Netzdienstentitätsserverinformationen die Identifikation des Netzdienstentitätsservers sind, die erste Nachrichtensendeeinheit spezifisch dafür ausgelegt ist, die IP-Adresse des Netzdienstentitätsservers gemäß der Identifikation des Netzdienstentitätsservers von der Aufzeichnungseinheit zu erfragen und die Nachricht gemäß der erfragten IP-Adresse des Netzdienstentitätsservers zu dem Netzdienstentitätsserver zu senden.

13. System zum Senden von Nachrichten, umfassend:
eine Nachrichtenzentrale (701), die dafür ausgelegt ist, eine Nachricht mit einer Mobilendgeräteidentifikation eines angerufenen Benutzers als Empfangsidentifikation zu empfangen, Netzdienstentitätsserverinformationen, die der Mobilendgeräteidentifikation des angerufenen Benutzers entsprechen, durch eine in einer Statusaufzeichnungseinrichtung aufgezeichnete Korrespondenzbeziehung zwischen der Mobilendgeräteidentifikation des angerufenen Benutzers und dem Netzdienstentitätsserver zu beschaffen und die Nachricht gemäß den Netzdienstentitätsserverinformationen zu einem Netzdienstentitätsserver zu senden; und
die Statusaufzeichnungseinrichtung (702), die dafür ausgelegt ist, eine Mobilendgeräteidentifikation eines angerufenen Benutzers mit einer Identifikation eines Netzdienstentitäts-Clients des angerufenen Benutzers zu empfangen, die durch den Netzdienstentitätsserver gesendet wird, wenn sich der angerufene Benutzer bei dem Netzdienstentitätsserver anmeldet, und die Korrespondenzbeziehung zwischen der Mobilendgeräteidentifikation des angerufenen Benutzers und dem Netzdienstentitätsserver aufzuzeichnen.

14. System zum Senden von Nachrichten nach Anspruch 13, ferner umfassend den Netzdienstentitätsserver (703), der dafür ausgelegt ist, die Mobilendgeräteidentifikation des angerufenen Benutzers, die mit einem Netzdienstentitäts-Client des Benutzers assoziiert ist, zu der Statusaufzeichnungseinrichtung zu senden, wenn sich der Benutzer bei dem Netzdienstentitätsserver anmeldet, und
wobei die Statusaufzeichnungseinrichtung ferner dafür ausgelegt ist, die lokal aufgezeichnete Korrespondenzbeziehung zwischen der Mobilendgeräteidentifikation des Benutzers und dem Netzdienstentitätsserver zu löschen, wenn sich der Benutzer von dem Netzdienstentitätsserver abmeldet.

## Revendications

1. Procédé de transmission de messages, comprenant :
la réception (s101), par un centre de messages, MC, d'un message, une identification de réception du message étant une identification de terminal mobile d'un utilisateur appelé ;
l'acquisition (s102), par le MC, d'informations de serveur d'entité de service réseau correspondant à l'identification de terminal mobile de l'utilisateur appelé par le biais d'une relation de correspondance entre l'identification de terminal mobile de l'utilisateur appelé et le serveur d'entité de service réseau enregistrée dans un dispositif d'enregistrement d'état, la relation de correspondance entre l'identification de terminal mobile de l'utilisateur appelé et le serveur d'entité de service réseau étant enregistrée par le dispositif d'enregistrement d'état après que le serveur d'entité de service réseau transmet l'identification de terminal mobile de l'utilisateur appelé associée à une identification d'un client d'entité de service réseau de l'utilisateur appelé au dispositif d'enregistrement d'état quand l'utilisateur appelé se connecte au serveur d'entité de service réseau ; et
la transmission (s103), par le MC, du message au serveur d'entité de service réseau en fonction des informations de serveur d'entité de service réseau.

2. Procédé selon la revendication 1, dans lequel la relation de correspondance entre l'identification de terminal mobile de l'utilisateur appelé et le serveur d'entité de service réseau est supprimée par le dispositif d'enregistrement d'état quand l'utilisateur appelé se déconnecte du serveur d'entité de service réseau.

3. Procédé selon la revendication 1, comprenant en outre :
la transmission (s804, s905, s1003) du message au terminal mobile de l'utilisateur appelé en fonction de l'identification de terminal mobile de l'utilisateur appelé en l'absence d'acquisition des informations de serveur d'entité de service réseau correspondant à l'identification de terminal mobile de l'utilisateur appelé enregistrées dans le dispositif d'enregistrement d'état.

4. Procédé selon la revendication 1, dans lequel les informations de serveur d'entité de service réseau sont une identification du serveur d'entité de service réseau ou une adresse IP du serveur d'entité de service réseau.

5. Procédé selon la revendication 4, comprenant en outre l'enregistrement de l'adresse IP correspondant à l'identification du serveur d'entité de service réseau quand le serveur d'entité de service réseau communique avec un centre de messages, et
si les informations de serveur d'entité de service réseau sont l'identification du serveur d'entité de service réseau, la transmission du message au serveur d'entité de service réseau de l'utilisateur appelé en fonction des informations de serveur d'entité de service réseau comprend : l'obtention de l'adresse IP correspondante en fonction de l'identification reçue du serveur d'entité de service réseau et la transmission du message au serveur d'entité de service réseau de l'utilisateur appelé en fonction de l'adresse IP du serveur d'entité de service réseau.

6. Dispositif d'enregistrement d'état, comprenant :
une unité d'enregistrement (202), configurée pour recevoir une identification de terminal mobile d'un utilisateur appelé avec une identification d'un client d'entité de service réseau de l'utilisateur appelé transmise par un serveur d'entité de service réseau quand l'utilisateur appelé se connecte au serveur d'entité de service réseau, et
enregistrer une relation de correspondance entre l'identification de terminal mobile de l'utilisateur appelé et le serveur d'entité de service réseau ; et
une unité de fourniture (203), configurée pour recevoir une requête d'acquisition d'informations de serveur d'entité de service réseau correspondant à une identification de terminal mobile d'un utilisateur appelé et fournir les informations de serveur d'entité de service réseau correspondant à l'identification de terminal mobile de l'utilisateur appelé par le biais d'une relation de correspondance entre l'identification de terminal mobile de l'utilisateur appelé et le serveur d'entité de service réseau enregistrée dans un dispositif d'enregistrement d'état en fonction de la requête.

7. Dispositif d'enregistrement d'état selon la revendication 6, dans lequel l'unité de fourniture est configurée en outre pour donner l'instruction à une unité d'acquisition d'acquérir les informations de serveur d'entité de service réseau correspondant à l'identification de terminal mobile de l'utilisateur appelé auprès d'un autre dispositif d'enregistrement d'état en fonction de la requête, et
le dispositif d'enregistrement d'état comp rend en outre l'unité d'acquisition (205) configurée pour acquérir les informations de serveur d'entité de service réseau correspondant à l'identification de terminal mobile de l'utilisateur appelé auprès l'autre dispositif d'enregistrement d'état.

8. Dispositif d'enregistrement d'état selon la revendication 6, comprenant en outre :
une unité de synchronisation (206), configurée pour actualiser de manière synchrone la relation de correspondance entre l'identification de terminal mobile de l'utilisateur et le serveur d'entité de service réseau avec l'autre dispositif d'enregistrement d'état.

9. Dispositif d'enregistrement d'état selon l'une quelconque des revendications 6 à 8, comprenant en outre :
une unité de contrôle (201), configurée pour contrôler l'état en ligne de l'utilisateur sur le serveur d'entité de service réseau ; et
une unité de suppression (204), configurée pour recevoir une notification de déconnexion de l'utilisateur transmise par l'unité de contrôle et supprimer la relation de correspondance entre l'identification de terminal mobile de l'utilisateur et le serveur d'entité de service réseau enregistrée dans l'unité d'enregistrement en fonction de la notification de déconnexion.

10. Centre de messages, comprenant :
une unité de réception de message (501), configurée pour recevoir un message, une identification de réception du message étant une identification de terminal mobile d'un utilisateur appelé ;
une unité d'acquisition (502), configurée pour acquérir des informations de serveur d'entité de service réseau correspondant à l'identification de terminal mobile de l'utilisateur appelé par le biais d'une relation de correspondance entre l'identification de terminal mobile de l'utilisateur appelé et le serveur d'entité de service réseau enregistrée dans un dispositif d'enregistrement d'état, une relation de correspondance entre l'identification de terminal mobile de l'utilisateur appelé et le serveur d'entité de service réseau étant enregistrée par le dispositif d'enregistrement d'état après que le serveur d'entité de service réseau transmet l'identification de terminal mobile de l'utilisateur appelé associée à une identification d'un client d'entité de service réseau de l'utilisateur appelé au dispositif d'enregistrement d'état quand l'utilisateur appelé se connecte au serveur d'entité de service réseau ; et
une première unité de transmission de message (503), configurée pour transmettre le message à un serveur d'entité de service réseau en fonction des informations de serveur d'entité de service réseau.

11. Centre de messages selon la revendication 10, comprenant en outre :
une seconde unité de transmission de message (505), configurée pour transmettre le message au terminal mobile de l'utilisateur appelé en fonction de l'identification de terminal mobile quand l'unité d'acquisition n'acquiert pas les informations de serveur d'entité de service réseau correspondant à l'identification de terminal mobile de l'utilisateur appelé.

12. Centre de messages selon la revendication 10, comprenant en outre une unité d'enregistrement (504) configurée pour enregistrer une relation de correspondance entre une identification du serveur d'entité de service réseau et une adresse IP du serveur d'entité de service réseau ; et
si les informations de serveur d'entité de service réseau sont l'identification du serveur d'entité de service réseau, la première unité de transmission de message est configurée spécifiquement pour demander l'adresse IP du serveur d'entité de service réseau auprès de l'unité d'enregistrement en fonction de l'identification du serveur d'entité de service réseau et transmettre le message au serveur d'entité de service réseau en fonction de l'adresse IP demandée du serveur d'entité de service réseau.

13. Système de transmission de messages, comprenant :
un centre de messages (701), configuré pour recevoir un message avec une identification de terminal mobile d'un utilisateur appelé comme identification de réception, acquérir des informations de serveur d'entité de service réseau correspondant à l'identification de terminal mobile de l'utilisateur appelé par le biais d'une relation de correspondance entre l'identification de terminal mobile de l'utilisateur appelé et le serveur d'entité de service réseau enregistrée dans un dispositif d'enregistrement d'état, et transmettre le message à un serveur d'entité de service réseau en fonction des informations de serveur d'entité de service réseau ; et
le dispositif d'enregistrement d'état (702), configuré pour recevoir une identification de terminal mobile d'un utilisateur appelé avec une identification d'un client d'entité de service réseau de l'utilisateur appelé transmise par le serveur d'entité de service réseau quand l'utilisateur appelé se connecte au serveur d'entité de service réseau, et
enregistrer la relation de correspondance entre l'identification de terminal mobile de l'utilisateur appelé et le serveur d'entité de service réseau.

14. Système de transmission de messages selon la revendication 13, comprenant en outre le serveur d'entité de service réseau (703) configuré pour transmettre l'identification de terminal mobile de l'utilisateur appelé associée à un client d'entité de service réseau de l'utilisateur au dispositif d'enregistrement d'état quand l'utilisateur se connecte au serveur d'entité de service réseau, et
le dispositif d'enregistrement d'état est configuré en outre pour supprimer la relation de correspondance entre l'identification de terminal mobile de l'utilisateur et le serveur d'entité de service réseau enregistrée localement quand l'utilisateur se déconnecte du serveur d'entité de service réseau.
